# EUROPÄISCHE PATENTSCHRIFT

(11) **EP 0 413 992 B1**
(45) Veröffentlichungstag und Bekanntmachung des Hinweises auf die Patenterteilung: **15.06.1994**
(21) Anmeldenummer: 90114499.8
(22) Anmeldetag: 27.07.1990
(51) Int. Cl.: C05F 17/00, C05F 17/02

(54) **Verfahren und Vorrichtung zur aeroben, fermentativen Hydrolyse, insbesondere zur Kompostierung von organischen Stoffen**
Process and apparatus for aerobic, fermentative hydrolysis, particularly for composting of organic materials
Procédé et appareil d'hydrolyse par fermentation aérobique en particulier pour compostage de matières organiques

(30) Priorität: 04.08.1989 DE 3925905
(43) Veröffentlichungstag der Anmeldung: 27.02.1991
(73) Patentinhaber: Hofmann, Hermann, D-35606 Solms (DE); Schnorr, Karl-Ernst, D-35633 Lahnau (DE)
(72) Erfinder: Hofmann, Hermann, D-35606 Solms (DE); Schnorr, Karl-Ernst, D-35633 Lahnau (DE)
(74) Vertreter: Zinnecker, Armin, Dipl.-Ing.

(56) Entgegenhaltungen:
- DE-A- 3 811 399
- GB-A- 2 214 910

## Beschreibung

Die Erfindung betrifft ein Verfahren zur aeroben, fermentativen Hydrolyse, insbesondere zur Kompostierung von organischen Stoffen in einem geschlossenen Behälter, bei dem den organischen Stoffen Frischluft zugeführt und die mit Wärme und Feuchtigkeit beladene Abluft abgeführt und gekühlt wird, wobei die Wärme der Abluft durch einen Wärmetauscher auf die zugeführte Frischluft übertragen wird. Weiterhin betrifft die Erfindung eine Vorrichtung zur Durchführung eines derartigen Verfahrens, bestehend aus einem geschlossenen Fermentationsbehälter zur Aufnahme der zu verarbeitenden organischen Stoffe mit einer Frischluftzuführung und einer Abluftabführung und einem Wärmetauscher, in dem die Wärme der Abluft an die Frischluft abgebbar ist.

Ein derartiges Verfahren ist aus der DE-OS 38 11 399 bekannt. Die Frischluft wird vor der Zuführung zu den organischen Stoffen erwärmt, was eine Energieeinsparung mit sich bringt. Die Abluft wird gekühlt und vorzugsweise kondensiert, um die Geruchsbelastung zu vermindern.

Aufgabe der Erfindung ist es, bei einem Verfahren und einer Vorrichtung der oben angegebenen Art die Stoffwechselbedingungen zu verbessern.

Bei einem Verfahren der eingangs angegebenen Art wird diese Aufgabe dadurch gelöst, daß die Abluft in mindestens zwei Teilströme aufgeteilt wird, daß die Wärme des ersten Abluftstroms durch einen ersten Wärmetauscher auf die zugeführte Frischluft übertragen wird und daß die Wärme des zweiten Abluftstroms durch einen zweiten Wärmetauscher auf die den ersten Wärmetauscher verlassende, durch diesen erwärmte Frischluft übertragen wird.

Bei einer Vorrichtung der eingangs angegebenen Art wird diese Aufgabe gelöst durch einen in der Abluftabführung vorgesehenen Stromteiler zur Teilung des Abluftstromes in mindestens zwei Teilströme und einen zweiten Wärmetauscher, der in Frischluftströmungsrichtung hinter den ersten Wärmetauscher in Reihe geschaltet ist, wobei jedem Wärmetauscher ein Abluft-Teilstrom zuführbar ist.

Die Verwendung von Kompost aus organischen Abfällen setzt eine sichere Entseuchung, d.h. Abtötung von krankheitserregenden Keimen voraus. Krankheitserregende Keime können für Menschen, Tiere und Pflanzen gefährlich sein und müssen daher durch eine geeignete Behandlung während der Kompostierung der Abfälle vernichtet, d.h. in einen lebensunfähigen Zustand überführt werden.

Es ist bekannt, daß dieser Zustand dann erreicht wird, wenn lebensfähige Zellen durch Erhöhung der Umgebungstemperatur oder durch antibiotisch wirkende Stoffe zerstört werden. Es ist daher wünschenswert, die Umgebungstemperatur in den organischen Stoffen zu erhöhen.

Nach der vorliegenden Erfindung wird dies dadurch erreicht, daß die Temperatur der zugeführten Frischluft erhöht wird. Um eine hohe Luftaustrittstemperatur der Frischluft zu erreichen, wird eine zweistufige Erwärmung der Frischluft durchgeführt. Dabei tritt die in der ersten Stufe vom ersten Wärmetauscher vorerwärmte Frischluft in einen nachgeschalteten, zweiten Wärmetauscher ein, der auch als Nacherhitzer bezeichnet werden kann. Der zweite Wärmetauscher wird von einem Abluft-Parallelstrom bzw. Abluft-Teilstrom der gleich hohen Temperatur wie bei der ersten Stufe bzw. dem ersten Wärmetauscher durchströmt. Die hierdurch bewirkte Erhöhung der Frischlufttemperatur führt nun zu einer so hohen Frischluft-Eintrittstemperatur in die organischen Stoffe (Rottegemisch), daß bereits am Boden und in den Randzonen des Rottegemischs Umgebungstemperaturen erreicht werden, bei denen krankheitserregende Keime lebensunfähig werden. Die Stoffwechselbedingungen in den organischen Stoffen werden also entscheidend verbessert. Mit dem erfindungsgemäßen Verfahren und der erfindungsgemäßen Vorrichtung ist es möglich, ohne die Zuführung von Fremdwärmeenergie die gesamte zu kompostierende Masse im Inneren der organischen Stoffe und in allen Randzonen (Boden-, Seiten- und Deckschichten) in einem Vorgang während der Intensivrotte zu entseuchen. Die während des aeroben Stoffwechsels stehende Wasserdampfenergie, die mit der durchgesetzten Luft bzw. Abluft aus dem Rottegemisch abgeführt wird, wird über die Wärmetauscher auf die Zuluft übertragen. Durch das erfindungsgemäße Verfahren und die erfindungsgemäße Vorrichtung wird es also ermöglicht, die Rottefrischluft ohne Fremdwärmezuführung auf Entseuchungstemperatur zu erwärmen. Dies wird dadurch erreicht, daß parallel geschaltete Abluftströme bzw. Abluft-Teilströme über in Frischluftströmungsrichtung in Reihe geschaltete Wärmetauscher geleitet werden.

Die Höchsttemperatur in der Abluft wird durch die mikrobiologische Stoffwechselaktivität in den organischen Stoffen selbsttätig geregelt. Wenn die Temperatur zu hoch wird, stellen auch jene Formen bzw. Mikroorganismen ihre Stoffwechseltätigkeit ein, die relativ hohe Temperaturen von beispielsweise über 70 bis 80° C noch schadlos überstehen. Die Folge davon ist, daß die Temperatur bei gleicher Luftmenge gleichbleibt oder absinkt.

Vorteilhafte Weiterbildungen sind in den Unteransprüchen beschrieben.

Es können noch weitere, in Frischluftströmungsrichtung in Reihe geschaltete Wärmetauscher vorgesehen sein. Jedem dieser Wärmetauscher wird ein Abluft-Teilstrom zugeführt, wobei diese Abluft-Teilströme parallel geschaltet sind.

Die Wärmetauscher sind vorzugsweise Luft-Luft-Wärmetauscher.

Vorzugsweise sind die Wärmetauscher derart vorgesehen und dimensioniert, daß die Feuchtigkeit der Abluft auskondensiert wird. Die nahezu vollständige Übertragung der Enthalpie biologisch freigesetzter Dämpfe auf die Zuluft und die damit verbundene Abkühlung der Abluft führen dazu, daß dampfförmige Geruchsstoffe und sonstige Stoffe durch Kondensation abgeschieden werden. Die Geruchsstoffe werden aus der Abluft entfernt, so daß sie die Atmosphäre nicht belasten.

Nach einer weiteren vorteilhaften Weiterbildung wird die Abluft durch ein Wasserbad, vorzugsweise das Kondensat, geleitet. Da die Luft hierbei zumindest teilweise durch die Kondensatflüssigkeit hindurchtritt, entsteht ein Wascheffekt.

Da die Austrittstemperatur der Abluft aus den Wärmetauschern bzw. Luft-Luft-Wärmetauschern noch relativ hoch ist und sie damit unter Umständen zumindest teilweise noch kondensierbare Stoffwechselprodukte enthält, kann sie nach einer vorteilhaften Weiterbildung der Erfindung nochmals über einen weiteren Wärmetauscher geleitet werden, der in Strömungsrichtung hinter den oben angegebenen Wärmetauschern liegt. Dieser weitere Wärmetauscher ist vorzugsweise ein Luft-Wasser-Wärmetauscher. Vorzugsweise wird die Kühlwassertemperatur dieses weiteren Wärmetauschers bzw. Luft-Wasser-Wärmerauschers so gewählt, daß alle kondensierbaren Bestandteile der Abluft auskondensieren. Diese auskondensierten Bestandteile können dann in flüssiger Form abgeleitet und ggf. nachbehandelt werden.

Bewährt hat sich weiterhin die Nachschaltung eines sorptiv wirkenden Festbettfilters, beispielsweise mit Kompostfüllung, und/oder einer Gaswaschanlage für nicht kondensierbare Bestandteile der Abluft.

Ein Ausführungsbeispiel der Erfindung wird nachstehend anhand der beigefügten Zeichnung im einzelnen beschrieben. In der Zeichnung zeigt
- Fig. 1: zwei in Frischluftströmungsrichtung in Reihe geschaltete Luft-Luft-Wärmetauscher mit zugehörigem Leitungssystem in einer isometrischen Darstellung,
- Fig. 2: die Temperatur im Frischluftstrom und in zwei parallelen Abluftströmen in einer schematischen Darstellung und
- Fig. 3: einen geschlossenen Fermentationsbehälter mit Druckgebläse und Unterdruckgebläse in einer Schnittdarstellung.

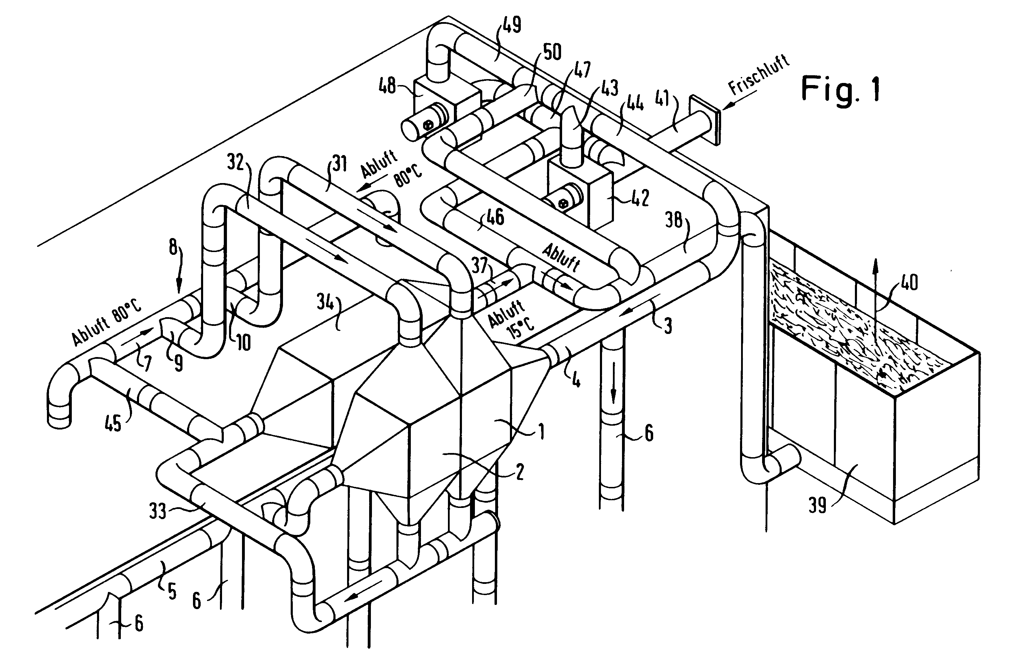

Das in Fig. 1 gezeigte Ausführungsbeispiel besitzt einen ersten Wärmetauscher 1 und einen in Frischluftströmungsrichtung 3 dahinter liegenden, in Reihe geschalteten zweiten Wärmetauscher 2. Die Frischluft wird im ersten Wärmetauscher 1 durch das Rohr 4 zugeführt. Sie gelangt nach Durchlaufen des ersten Wärmetauschers 1 zum zweiten Wärmetauscher 2 und dort in die Sammelleitung 5 für erwärmte Frischluft. Von dieser Sammelleitung 5 zweigen mehrere Frischluftleitungen 6 für erwärmte Frischluft ab. Jede dieser Leitungen 6 führt zum Frischlufteingang eines oder mehrerer, in Fig. 1 nicht gezeigter Fermentationsbehälter.

Von diesen Fermentationsbehältern führen Abluftleitungen zur Abluft-Sammelleitung 7, in der ein Stromteiler 8 vorgesehen ist. Der Stromteiler 8 besteht aus zwei Anschlüssen 9, 10, an die sich zwei Abluft-Teilstromleitungen 31, 32 anschließen. Jede der Abluft-Teilstromleitungen führt zu einem der beiden Wärmetauscher 1, 2, die als Luft-Luft-Wärmetauscher ausgebildet sind.

Am Abluft-Ausgang der Wärmetauscher 1, 2 befindet sich die Leitung 33 für abgekühlte Abluft. An diese schließt sich ein weiterer Luft-Wasser-Wärmetauscher 34 an, dessen Ausgang mit der Abluftleitung 37, 38 verbunden ist. Am Ende der Abluftleitung 38 befindet sich das sorptiv wirkende Festbett-Filter 39, das von unten nach oben durchströmt wird und von dem gefilterte, gekühlte Abluft in Richtung des Pfeiles 40 austritt.

Die Frischluft tritt durch die Frischluftleitung 41 ein. Sie wird durch das Frischluftgebläse 42 in die Frischluft-Zuleitung 43, 44 gefördert und gelangt von dort in Frischluft-Zuführrichtung 3 über das Rohr 4 in den ersten Wärmetauscher 1.

Eine weitere Leitung 45, die die Abluft-Sammelleitung 7 mit dem Eingang des weiteren Luft-Wasser-Wärmetauschers 34 verbindet, dient dazu, die Wärmetauscher 1, 2 zu überbrücken, also zu umgehen. Wenn diese normalerweise geschlossene Leitung 45 geöffnet wird, wird die Abluft ohne Erwärmung der Frischluft unmittelbar dem Luft-Wasser-Wärmetauscher 34 zugeführt und von diesem abgekühlt.

Die weitere Leitung 46 verbindet den Ausgang des Luft-Wasser-Wärmetauschers 34 mit der Frischluft-Zuführleitung 41. Die weitere Leitung 47 verbindet die Leitung 46 mit einem Gebläse 48, an das sich die Leitung 49 anschließt, die zur Frischluftleitung (druckseitig) 44 führt. Von der Leitung 49 zweigt die Leitung 50 zur Abluftleitung 38 ab. Über die Leitung 46 kann ein Teil der Abluft der von der Leitung 41 kommenden Frischluft zugeführt werden. Das Gemisch aus Frischluft und Abluft gelangt dann über die Leitung 47 und das Gebläse 48 in die Leitung 49, von wo es der Frischluftleitung (druckseitig) 44 zugeführt wird.

Die Leitung 50 dient zur Zumischung von Frischluft zur Abluft. Die Frischluft gelangt von der Leitung 41 über die Leitung 47 in das Gebläse 48 und von dort über die Leitung 49 in die Leitung 50, von wo sie der Abluft in der Leitung 38 zugemischt wird.

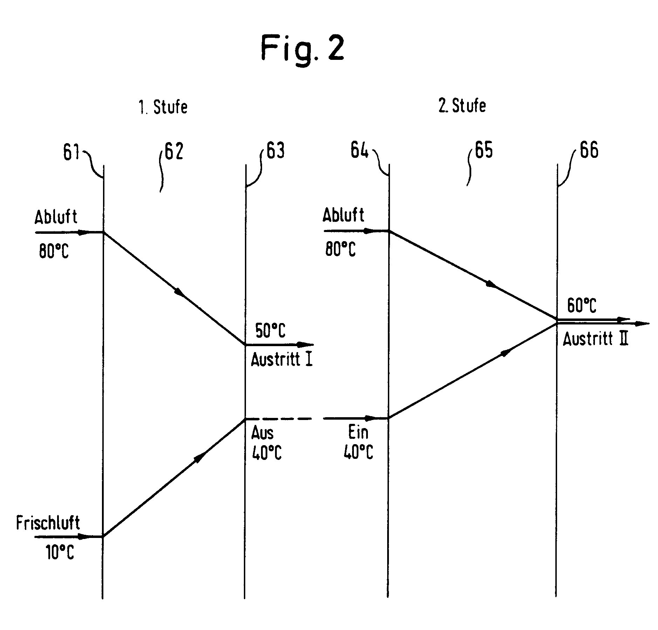

Die Fig. 2 zeigt den Temperaturverlauf der Zuluft und der Abluft in den Wärmetauschern 1 und 2. Die Linie 61 repräsentiert den Eingang des ersten Wärmetauschers 1. In dem gewählten Ausführungsbeispiel hat dort die über die Leitung 31 zugeführte Abluft eine Temperatur von 80° C und die über die Leitung 4 zugeführte Frischluft eine Temperatur von 10° C. Im ersten Wärmetauscher (erste Stufe) entsteht der im Bereich 62 dargestellte Temperaturverlauf. Die Ablufttemperatur sinkt auf 50° C ab, während die Frischlufttemperatur auf 40° C ansteigt. Die Frischluft verläßt also den ersten Wärmetauscher 1 mit 40° C und tritt mit dieser Temperatur in den Wärmetauscher 2 ein. Die Linien 63 und 64 in Fig. 2 repräsentieren den Ausgang des ersten Wärmetauschers 1 bzw. den Eingang des zweiten Wärmetauschers 2.

In dem zweiten Wärmetauscher 2 tritt der zweite Teilstrom der Abluft über die Leitung 32 mit einer Temperatur von 80° C ein. Weiterhin tritt in den zweiten Wärmetauscher 2 die bereits vom ersten Wärmetauscher auf 40° C erwärmte Frischluft ein. Im zweiten Wärmetauscher findet der im Bereich 65 gezeigte Temperaturverlauf statt. Die Abluft kühlt sich auf 60° C ab, die bereits auf 40° C erwärmte Zuluft erwärmt sich noch weiter auf ebenfalls 60° C. Die Linie 66 repräsentiert den Ausgang des zweiten Wärmetauschers 2. Die Frischluft verläßt diesen zweiten Wärmetauscher 2 mit 60° C und tritt in die Frischluft-Sammelleitung 5 ein. Auch die Abluft verläßt den zweiten Wärmetauscher 2 mit 60° C. Beide Abluft-Teilströme, die aus den beiden Wärmetauschern 1 und 2 austreten, werden in der Abluftleitung 33 zusammengefaßt.

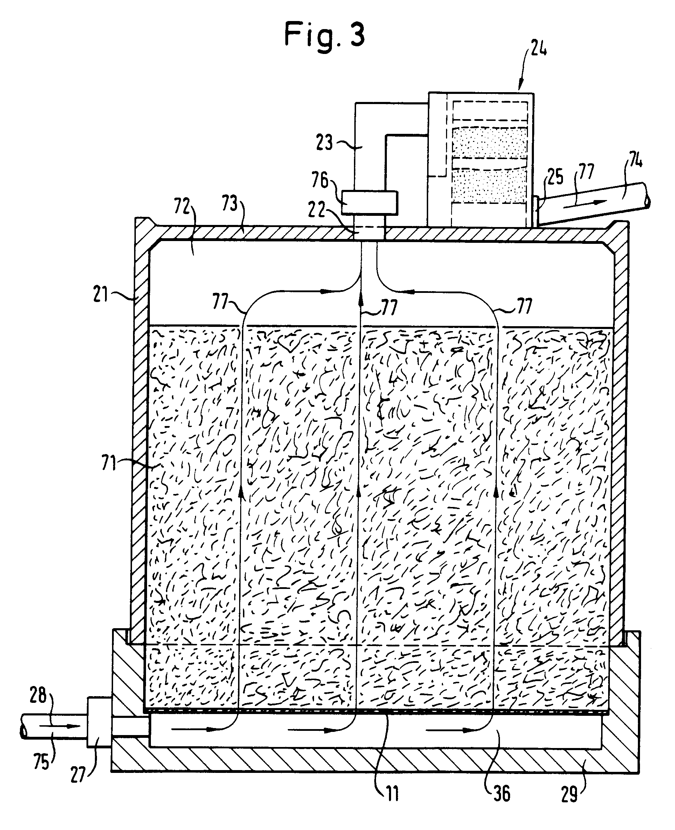

Die Fig. 3 zeigt einen geschlossenen Fermentationsbehälter 21 zur Aufnahme der zu verarbeitenden organischen Stoffe, also des Rottegemischs 71. Das Rottegemisch 71 liegt auf einem mit Durchtrittsöffnungen versehenen Boden 11 auf, unter dem sich ein Frischluftkanal 36 befindet. Über dem Rottegemisch 71 befindet sich der Freiraum 72, an den sich die obere Endwand des Behälters 21 anschließt. In der oberen Endwand 73 befindet sich die Abluftöffnung 22, an die sich das Abluftrohr 23 anschließt. Es führt über einen Filter 24 und einen Austrittsstutzen 25 in ein Abluftrohr 74, welches an die Abluft-Sammelleitung 7 in Fig. 1 angeschlossen ist. Das Frischluft-Zuführrohr 75 ist an die Frischluft-Sammelleitung 5 bzw. die Frischluft-Zuführleitungen 6 in Fig. 1 angeschlossen.

Die erwärmte Frischluft gelangt von der Frischluft-Sammelleitung 5 über die Frischluft-Leitungen 6 in die Frischluft-Zuführleitung 75. Sie strömt von dort in Richtung des Pfeiles 28 in das Druckgebläse 27. Die Frischluft wird also von diesem Druckgebläse 27 in den Frischluftkanal 36 und von dort über die Öffnungen in dem Boden 11 in das Rottegemisch 71 hineingedrückt. Oberhalb der Abluftöffnung 22 befindet sich in dem Abluftrohr 23 ein Sauggebläse 76. Der Luftströmungsverlauf durch das Rottegemisch wird durch die Pfeile 77 angedeutet. Das Rottegemisch 71 befindet sich auf der Saugseite des Sauggebläses 76, die Abluftleitung 74, die von der Abluft in Richtung des Pfeiles 77 durchströmt wird, befindet sich auf dessen Druckseite.

## Patentansprüche

1. Verfahren zur aeroben, fermentativen Hydrolyse, insbesondere zur Kompostierung von organischen Stoffen (71) in einem geschlossenen Behälter (21),
bei dem den organischen Stoffen (71) Frischluft zugeführt und die mit Wärme und Feuchtigkeit beladene Abluft abgeführt und gekühlt wird,
wobei die Wärme der Abluft durch einen Wärmetauscher (1) auf die zugeführte Frischluft übertragen wird,
**dadurch gekennzeichnet,**
daß die Abluft in mindestens zwei Teilströme (31, 32) aufgeteilt wird,
daß die Wärme des ersten Abluftstroms durch einen ersten Wärmetauscher (1) auf die zugeführte Frischluft übertragen wird
und daß die Wärme des zweiten Abluftstroms (32) durch einen zweiten Wärmetauscher (2) auf die den ersten Wärmetauscher (1) verlassende, durch diesen erwärmte Frischluft übertragen wird.

2. Verfahren nach Anspruch 1, dadurch gekennzeichnet, daß noch weitere, in Frischluftströmungsrichtung (3) in Reihe geschaltete Wärmetauscher vorgesehen sind.

3. Verfahren nach Anspruch 1 oder 2, dadurch gekennzeichnet, daß die Wärmetauscher (1, 2) Luft-Luft-Wärmetauscher sind.

4. Verfahren nach einem der vorhergehenden Ansprüche, dadurch gekennzeichnet, daß die Feuchtigkeit der Abluft auskondensiert wird.

5. Verfahren nach einem der vorhergehenden Ansprüche, dadurch gekennzeichnet, daß die Abluft durch ein Wasserbad, vorzugsweise das Kondensat, geleitet wird.

6. Verfahren nach einem der vorhergehenden Ansprüche, dadurch gekennzeichnet, daß die Abluft in Strömungsrichtung hinter den Wärmetauschern (1, 2) durch einen weiteren Wärmetauscher (34), vorzugsweise einen Luft-Wasser-Wärmetauscher, geleitet wird.

7. Verfahren nach Anspruch 6, dadurch gekennzeichnet, daß die Kühlwassertemperatur des weiteren Wärmetauschers (34) so gewählt ist, daß alle kondensierbaren Bestandteile der Abluft auskondensieren.

8. Verfahren nach einem der vorhergehenden Ansprüche, dadurch gekennzeichnet, daß in Strömungsrichtung hinter den Wärmetauschern (1, 2; 34) ein sorptiv wirkendes Festbettfilter (39) und/oder eine Gaswaschanlage vorgesehen sind.

9. Vorrichtung zur Durchführung des Verfahrens nach einem der Ansprüche 1 bis 8, bestehend aus
einem geschlossenen Fermentationsbehälter (21) zur Aufnahme der zu verarbeitenden organischen Stoffe (71) mit einer Frischluftzuführung (5, 75) und einer Abluftabführung (74, 7)
und einem Wärmetauscher (1), in dem die Wärme der Abluft an die Frischluft abgebbar ist,
**gekennzeichnet durch**
einen in der Abluftabführung (7) vorgesehenen Stromteiler (8) zur Teilung des Abluftstromes in mindestens zwei Teilströme (31, 32)
und einen zweiten Wärmetauscher (2), der in Frischluftströmungsrichtung (3) hinter dem ersten Wärmetauscher (1) in Reihe geschaltet ist,
wobei jedem Wärmetauscher (1, 2) ein Abluft-Teilstrom (31, 32) zuführbar ist.

10. Vorrichtung nach Anspruch 9, gekennzeichnet durch weitere, in Frischluftströmungsrichtung (3) in Reihe geschaltete Wärmetauscher, denen parallele Abluft-Teilströme zuführbar sind.

11. Vorrichtung nach Anspruch 9 oder 10, dadurch gekennzeichnet, daß die Wärmetauscher (1, 2) Luft-Luft-Wärmetauscher sind.

12. Vorrichtung nach einem der Ansrüche 9 bis 11, gekennzeichnet durch einen weiteren, in Abluft-Strömungsrichtung hinter den Wärmetauschern (1, 2) vorgesehenen Wärmetauscher (34), vorzugsweise einen Luft-Wasser-Wärmetauscher.

13. Vorrichtung nach einem der Ansprüche 9 bis 12, dadurch gekennzeichnet, daß in Abluft-Strömungsrichtung hinter den Wärmetauschern (1, 2; 34) ein sorptiv wirkendes Festbettfilter (39) und/oder eine Gaswaschanlage vorgesehen sind.

## Claims

1. Process for aerobic, fermentative hydrolysis, particularly for composting of organic materials (71) in a closed container (21),
in which process fresh air is supplied to the organic materials (71) and the exhaust air laden with heat and moisture is removed and cooled,
wherein the heat or the exhaust air is transferred via a heat exchanger (1) to the incoming fresh air supply,
**characterised in that**
the exhaust air flow is divided into at least two streams (31, 32),
the heat of the first exhaust air stream is transferred to the incoming fresh air supply via a first heat exchanger (1),
and the heat of the second exhaust air stream (32) is transferred via a second heat exchanger (2) to the partially heated fresh air leaving the first heat exchanger (1).

2. Process according to Claim 1, characterised in that further heat exchangers are provided, arranged in series, in the direction of the fresh air flow (3).

3. Process according to Claim 1 or 2, characterised in that the heat exchangers (1, 2) are air/air heat exchangers.

4. Process according to one of the preceding claims, characterised in that the moisture content of the exhaust air is condensed and separated out.

5. Process according to one of the preceding claims, characterised in that the exhaust air is directed through a water bath, preferably the condensate.

6. Process according to one of the preceding claims, characterised in that the exhaust air downstream of the heat exchangers (1, 2) is directed through a further heat exchanger (34), preferably an air/water heat exchanger.

7. Process according to Claim 6, characterised in that the cooling water temperature of the subsequent heat exchanger (34) is selected such that all condensable constituents of the exhaust air are condensed and separated out.

8. Process according to one of the preceding claims, characterised in that downstream of the heat exchangers (1, 2; 34) is arranged a sorption-action packed bed filter (39) and/or a gas washing facility.

9. Apparatus for implementation of the process according to one of claims 1 to 8, comprising
a closed fermentation tank (21) for receiving the organic materials (71) to be processed, with a fresh air supply arrangement (5, 75) and an exhaust air removal arrangement (74, 7)
and a heat exchanger (1) in which the heat contained in the exhaust air can be transferred to the fresh air,
**characterised by**
a flow divider (8) provided in the exhaust air removal arrangement (7) for dividing the exhaust air flow into at least two streams (31, 32)
and a second heat exchanger (2) arranged in the direction of fresh air flow (3) downstream of the first heat exchanger (1) and series connected to same,
wherein each heat exchanger (1, 2) can be fed with one exhaust air stream (31, 32).

10. Apparatus according to Claim 9, characterised by further series-connected heat exchangers arranged in the direction of the fresh air flow (3), to which parallel exhaust air streams can be supplied.

11. Apparatus according to Claim 9 or 10, characterised in that the heat exchangers (1, 2) are air/air heat exchangers.

12. Apparatus according to one of Claims 9 to 11, characterised by a further heat exchanger (34), preferably an air/water heat exchanger, arranged in the exhaust air flow direction downstream of heat exchangers (1, 2).

13. Apparatus according to one of Claims 9 to 12, characterised in that, in the exhaust air flow direction downstream of the heat exchangers (1, 2; 34), is provided a sorption-action packed bed filter (39) and/or a gas washing or scrubbing facility.

## Revendications

1. Procédé d'hydrolyse par fermentation aérobique, en particulier pour compostage de matières organiques (71) dans un récipient fermé (21),
dans lequel de l'air frais est amené aux matières organiques (71) et dans lequel l'air d'échappement chargé de chaleur et d'humidité est évacué et refroidi,
la chaleur de l'air d'échappement étant transmise par un échangeur de chaleur (1) à l'air frais amené,
**caractérisé en ce que**
l'air d'échappement est subdivisé en au moins deux courants partiels (31, 32),
que la chaleur du premier courant d'air d'échappement est transmise par un premier échangeur de chaleur (1) à l'air frais amené
et que la chaleur du deuxième courant d'air d'échappement (32) est transmise par un deuxième échangeur de chaleur (2) à l'air frais quittant le premier échangeur de chaleur (1) réchauffé par celui-ci.

2. Procédé selon la revendication 1, caractérisé en ce que des échangeurs de chaleur supplémentaires sont prévus en ligne dans la direction du courant d'air frais (3).

3. Procédé selon les revendications 1 ou 2, caractérisé en ce que les échangeurs de chaleur (1, 2) sont des échangeurs de chaleur air/air.

4. Procédé selon l'une quelconque des revendications précédentes, caractérisé en ce que l'humidité de l'air d'échappement est éliminé par condensation.

5. Procédé selon l'une quelconque des revendications précédentes, caractérisé en ce que l'air d'échappement est dirigé à travers un bain-marie, de préférence le condensat.

6. Procédé selon l'une quelconque des revendications précédentes, caractérisé en ce que l'air d'échappement est dirigé en direction du courant en aval des échangeurs de chaleur (1, 2) à travers un échangeur de chaleur supplémentaire (34), de préférence un échangeur de chaleur air/eau.

7. Procédé selon la revendication 6, caractérisé en ce que la température de l'eau de refroidissement de l'échangeur de chaleur supplémentaire (34) est choisie de manière à ce que tous les composants condensables de l'air d'échappement puissent être séparés par condensation.

8. Procédé selon l'une quelconque des revendications précédentes, caractérisé en ce qu'en direction du courant, en aval des échangeurs de chaleur (1, 2 ; 34), un filtre à lit fixe (39) à action sorptive et/ou une installation de lavage des gaz est prévu/e.

9. Dispositif pour la réalisation d'une procédé selon l'une quelconque des revendications 1 à 8, consistant en
un récipient de fermentation (21) fermé pour recevoir les matières organiques (71) à traiter avec une amenée d'air frais (5, 75) et une conduite d'air d'échappement (74, 7)
et un échangeur de chaleur (1) dans lequel la chaleur de l'air d'échappement peut être transmise à l'air frais,
**caractérisé dans**
un répartiteur de courant (8) prévu dans la conduite d'air d'échappement (7) pour diviser le courant d'air d'échappement en au moins deux courants partiels (31, 32)
et un deuxième échangeur de chaleur (2) qui, dans la direction du courant d'air frais (3) est placé en série en aval du premier échangeur de chaleur (1),
dans lequel un courant partiel d'air d'échappement (31, 32) peut être amené à chaque échangeur de chaleur (1, 2).

10. Dispositif selon la revendication 9, caractérisé par un échangeur de chaleur supplémentaire placé en série en direction du courant d'air frais (3) auquel des courants partiels d'air d'échappement parallèles peuvent être amenés.

11. Dispositif selon les revevendications 9 ou 10, caractérisé en ce que les échangeurs de chaleur (1, 2) sont des échangeurs de chaleur air/air.

12. Dispositif selon l'une quelconque des revendications 9 à 11, caractérisé par un échangeur de chaleur (34) supplémentaire prévu en direction du courant d'air d'échappement en aval des échangeurs de chaleur (1, 2), qui est de préférence un échangeur de chaleur air/eau.

13. Dispositif selon l'une quelconque des revendications 9 à 12, caractérisé en ce qu'un filtre à lit fixe à action sorptive (39) et/ou une installation de lavage des gaz sont prévus en aval des échangeurs de chaleur (1, 2 ; 34) en direction du courant des gaz d'échappement.
